# EUROPEAN PATENT APPLICATION

(11) **EP 3 985 340 A1**
(43) Date of publication of application: **20.04.2022**
(21) Application number: 20201440.3
(22) Date of filing: 13.10.2020
(51) Int. Cl.: F28D 20/00

(54) **THERMAL ENERGY STORAGE PLANT**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

A thermal energy storage plant (10) comprising:
- a fluid transporting machine (110) for generating a flow of a working fluid,
- a heating device (120),
- a thermal energy storage (130),
- a first flow path (141) from a source (151) of the working fluid to an insertion point (111), the first flow path (141) including a first thermal exchange path (141a) along which the temperature of the working fluid is raised from an initial temperature (T0) to a first temperature (T1),
- a second flow path (142) from an extraction point (112) to a waste (152), the second flow path (142) including a second thermal exchange path (142a) along which the temperature of the working fluid is lowered from a second temperature (T2) higher than the first temperature (T1) to a final temperature (T3),
the first thermal exchange path (141a) and the second thermal exchange path (142a) being in thermal contact with each other.

## Description

### Field of invention

The present invention relates to a plant for storing thermal energy and to a method for operating such plant.

### Art Background

The integration of renewable energy into the main power supply network challenges the energy grid, since it was designed for central power production. Electricity generated by renewable energy sources has an unlimited precedence for power supply to the electricity network to support the integration in the energy system and increase its share of the electricity production. Energy production from renewable energy sources is difficult to forecast and depends on weather conditions such as wind speed and solar radiation. To handle this fluctuating production, renewable energy sources have to be curtailed, fossil fueled power plants providing base load need to become more flexible or energy prices reduce strongly due to the high supply. In addition, the location of production of renewable energy such as onshore and offshore wind does not coincide with the region of high-power consumption. Therefore, energy storage plants play an important role in the improvement of the stability of power supply networks. Sensible thermal storages are state of the art for storing fluctuating energy from renewable sources. Electrical excess energy from the main supply grid is transformed into thermal energy and is stored in some storage material. In times with no or low occurrence of energy from the renewable sources, for example wind, the stored thermal energy is used for generating steam to produce electrical energy over a steam turbo generator and the produced electricity is fed in the main supply grid.

Materials intended for use in energy storage plants often contain water which is disadvantageous for the operation of the storage due to corrosion, condensation and fouling effects. Water can originate either from natural water within the materials or due to the setting of a humidity equilibrium between the storage material and the environment. Furthermore, dust is brought into the system from production processes and erosion of materials.

It is known to operate an energy storage plant on high power in open cycle mode, i.e. connected with the external ambient, for an extended period to reduce the humidity in the storage. This method has shown to be very energy demanding as well as time consuming even for a relatively small energy storage and is therefore not suitable for future larger storages.

There may be a need for improving a thermal energy storage plant in such a manner that the above mention inconveniences can be suppressed or reduced in an optimized way.

### Summary of the Invention

This need may be met by the subject matter according to the independent claims. Advantageous embodiments of the present invention are described by the dependent claims.

According to a first aspect of the invention there is provided a thermal energy storage plant comprising:
- a fluid transporting machine for generating a flow of a working fluid in the thermal energy storage plant,
- a heating device for transferring heat to the working fluid,
- a thermal energy storage for storing the thermal energy of the working fluid,
wherein the thermal energy storage plant further includes:
- an insertion point for receiving at least a portion of the working fluid from a source,
- an extraction point for delivering at least a portion of the working fluid to a waste,
- a first flow path extending from the source of the working fluid to the insertion point, the first flow path including a first thermal exchange path along which the temperature of the working fluid is raised from an initial temperature to a first temperature,
- a second flow path extending from the extraction point to the waste, the second flow path including a second thermal exchange path along which the temperature of the working fluid is lowered from a second temperature higher than the first temperature to a final temperature, the first thermal exchange path and the second thermal exchange path being in thermal contact with each other.

According to a second aspect of the invention there is provided a method for operating a thermal energy storage plant including a fluid transporting machine for generating a flow of a working fluid in the thermal energy storage plant, a heating device for transferring heat to the working fluid, a thermal energy storage for storing the thermal energy of the working fluid, the method comprising the steps of:
- connecting a source of working fluid to an insertion point of the thermal energy storage plant through a first flow path, the first flow path including a first thermal exchange path along which a first temperature of the working fluid is raised from an initial temperature to a first temperature,
- connecting an extraction point of the thermal energy storage plant to a waste through a second flow path, the second flow path including a second thermal exchange path along which the temperature of the working fluid is lowered from a second temperature higher than the first temperature to a final temperature, the first thermal exchange path and the second thermal exchange path being in thermal contact with each other.

A cold flow of the working fluid enters the thermal energy storage plant through the first flow path, while simultaneously a hot humid flow of the working fluid is discharged to a waste through the second flow path. The first flow path includes a first thermal exchange path and the second flow path includes a second thermal exchange path, in thermal contact with the first thermal exchange path. The temperature of the working fluid along first thermal exchange path is raised, while the temperature of the working fluid along the second thermal exchange path decreases. As a result of this continuous process, hot humid working fluid is constantly exchanged for hot dry working fluid. Compared to the prior art, the present invention allows a substantial reduction of the energy (and therefore costs) required for extracting humidity. The drying process is accelerated. Furthermore, dust can be blown out of the process with the flow of the hot humid working fluid towards the waste. With the expression "at least a portion of the working fluid" it is meant that through the first and the second flow path a complete exchange of the working fluid is not necessarily performed, but, according to the most typical embodiment of the invention, a portion of the working fluid is exchanged.

The working fluid may be air. Accordingly, in embodiments of the present invention one or both of the sources and the waste may be connected to the external environment. In such embodiments, cold air from the environment enters the thermal energy storage plant at the insertion point, while simultaneously hot humid air from the extraction point is discharged to the environment.

According to embodiments of the present invention, the thermal energy storage plant further includes a heat exchanger comprising the first thermal exchange path and the second thermal exchange path. The first thermal exchange path and the second thermal exchange path may be arranged in countercurrent with respect to each other.

According to embodiments of the present invention, the fluid transporting machine, the heating device and the thermal energy storage may be arranged in a heat storage cycle, the thermal energy storage being arranged, with respect to the flow of the working fluid, downstream the heating device and upstream the fluid transporting machine. In such cycle, the temperature of the working fluid is increased in the heating device. Subsequently the flow of working fluid enters the storage device where it absorbs excess humidity from the storage material. Storage material in the thermal energy storage may include a granular material, i.e. a conglomerate of discrete solid elements or particles, for example stones or rocks, having a convenient thermal capacity for storing thermal energy at a desired temperature range. The working fluid passes then through the fluid transporting machine and is delivered to the heating device. The fluid transporting machine may be a blower.

According to embodiments of the present invention, the insertion point and the extraction point are provided along the above-described heat storage cycle. The extraction point may be positioned downstream of the insertion point. Alternatively, the extraction point may be positioned upstream of the insertion point. In particular, the extraction point and the insertion point may be both positioned downstream of the thermal energy storage. In one embodiment of the present invention the extraction point and the insertion point are respectively positioned downstream and upstream of the fluid transporting machine.

According to an embodiment of the present invention, the extraction point and the insertion point are both positioned upstream of the fluid transporting machine, the extraction point may be positioned upstream of the insertion point. Such embodiment may further include an insertion fluid transporting machine provided on the first flow path. The insertion fluid transporting machine may not be present if the heat storage cycle is operating on an underpressure relative to the source of working fluid. Such embodiment may further include an extraction fluid transporting machine provided on the second flow path. The extraction fluid transporting machine may not be present if the heat storage cycle is operating on an overpressure relative to the waste.

Even if the relative humidity of the working fluid at the conditions of the source, for example the ambient environment, is high, it is lowered significantly due to the increase in temperature in both the first flow path and the heating device. In these conditions water extraction from the storage material is facilitated. The in- and outflow of the working fluid from the heat storage cycle through the insertion point and the extraction point are made possible due to a difference in pressure along the heat storage cycle. Relative to the pressure in the source of working fluid, which may be the atmospheric environment, there is a low-pressure region upstream of the fluid transporting machine (where the working fluid enters the heat storage cycle through the insertion point) and a high-pressure region downstream of the fluid transporting machine (where a portion of the working fluid leaves the heat storage cycle).

According to embodiments of the present invention, the first flow path may include a first valve for regulating the mass flow in the first flow path. Analogously, the second flow path may include a second valve for regulating the mass flow in the second flow path. Each of the two valves allows isolating the first flow path and the second flow, respectively, from the storage cycle, if required. A plurality of valves with the same purpose of regulating the mass flow may be provided on each of the first and second flow path.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Fig. 1: shows a schematic diagram of a thermal energy storage plant, according to a first embodiment of present invention,
- Fig. 2: shows a temperature diagram illustrating the functioning of a component of the thermal energy storage plant of figure 1.
- Fig. 3: shows a schematic diagram of a thermal energy storage plant, according to a second embodiment of present invention.
- Fig. 4: shows the schematic diagram of the thermal energy storage plant of figure 3, in another operative configuration.

### Detailed Description

The illustration in the drawing is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

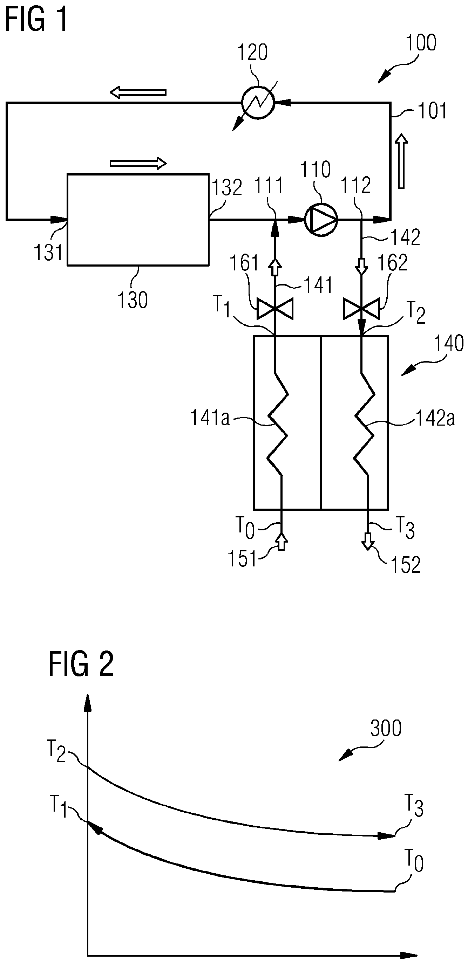

**Figure 1** schematically shows a thermal energy storage plant 100 comprising a heat storage cycle 101, where a working fluid is circulated. The working fluid may be in particular air from the ambient environment. According to other possible embodiments, the working fluid may be a different gaseous or liquid medium. The heat storage cycle 101 includes, in a closed loop:
- a fluid transporting machine 110 for generating a flow of the working fluid in the thermal energy storage plant 100. The fluid transporting machine 110 may be an air blower,
- a heating device 120 for transferring heat to the working fluid. The heating device 120 may be a resistant or inductive heater or a heat pump fed by the electrical power generated by an energy source, for example a renewable energy source,
- a thermal energy storage 130 for storing the thermal energy of the working fluid.

In particular, according to possible embodiments of the present invention, convenient renewable energy sources may be the wind speed generating power by means of a wind turbine or solar radiation generating power by means of photovoltaic cells.

The thermal energy storage 130 is arranged, with respect to the flow of the working fluid, downstream the heating device 120 and upstream the fluid transporting machine 110. The thermal energy storage 130 comprises a hot end 131 connected to the heating device 120 and a cold end 132 connected to the fluid transporting machine 110. The thermal energy storage 130 may house a granular material comprising a plurality of discrete solid elements or particles, for example stones or rocks, having a convenient thermal capacity for storing thermal energy transferred by the working fluid at a desired temperature range. The working fluid allows transferring the energy feeding the heating device 120 to the thermal energy storage 130.

The thermal energy storage plant 100 further includes an insertion point 111 for receiving at least a portion of the working fluid from a source 151 and an extraction point 112 for delivering at least a portion of the working fluid to a waste 152. According to embodiments of the present invention, it is not normally required that a complete exchange of the working fluid is performed through the first and the second flow path. In embodiments where the working fluid is air, both the source 151 and the waste 152 may be coincident with the ambient environment. The extraction point 112 and the insertion point 111 are positioned in the thermal energy storage plant 100 with respect to the flow of a working fluid so that:
- the insertion point 111 is positioned downstream the thermal energy storage 130 and upstream the fluid transporting machine 110,
- the extraction point 112 is positioned downstream of the fluid transporting machine 110.

The thermal energy storage plant 100 further includes:
- a first flow path 141 from the source 151 of the working fluid to the insertion point 111, the first flow path 141 including a first thermal exchange path 141a.
- a second flow path 142 from the extraction point 112 to the waste 152, the second flow path 142 including a second thermal exchange path 142a.

The first thermal exchange path 141a and the second thermal exchange path 142a are in thermal contact with each other. The temperature of the working fluid is raised along the first thermal exchange path 141a from an initial temperature T0 to a first temperature T1, the temperature of the working fluid being lowered along the second thermal exchange path 141a from a second temperature T2 higher than the first temperature T1 to a final temperature T3. According to the embodiment of figure 1, the thermal energy storage plant 100 further includes a heat exchanger 140 comprising both the first thermal exchange path 141a and the second thermal exchange path 142a, which are arranged in countercurrent with respect to each other. The first flow path 141 includes at least a first valve 161 for regulating the mass flow in the first flow path 141. The first valve 161 may be arranged between the insertion point 111 and the heat exchanger 140. The second flow path 142 includes at least a second valve 162 for regulating the mass flow in the second flow path 142. The second valve 162 may be arranged between the extraction point 112 and the heat exchanger 140. According to other embodiments (not shown) of the present invention, in each of the first flow path 141 and the second flow path 142, a plurality of respective valves 161, 162 may be provided.

With reference to **Figure 2****,** the functioning and temperature curves of the thermal exchange paths 141a, 142a are illustrated in a temperature cartesian diagram 300, where the ordinate axis represents temperature and the abscissa axis the distance along the thermal exchange paths 141a, 142a oriented from the insertion point 111 and the extraction point 112 towards the source 151 and the waste 152. The initial temperature T0 is the temperature of the working fluid (for example air) in the source 151 (for example the ambient environment). The working fluid is heated up to the first temperature T1 (higher than the initial temperature T0) along the first thermal exchange paths 141a. The working fluid is then guided into the heat storage cycle 101, through the insertion point 111. The working fluid leaves the heat storage cycle 101 from the extraction point 112 and then enters the second thermal exchange paths 142a at the second temperature T2, which is higher than the first temperature T1. The working fluid flows in the second thermal exchange paths 142a and is emitted therefrom at the final temperature T3, lower than the second temperature T2. The working fluid flows finally into the waste 152 (for example the ambient environment). Ideally, in a countercurrent scheme, the first temperature T1 is higher than the final temperature T3, which in this case means the working fluid leaving the first thermal exchange path 141a is hotter than the working fluid leaving the second thermal exchange path 142a.

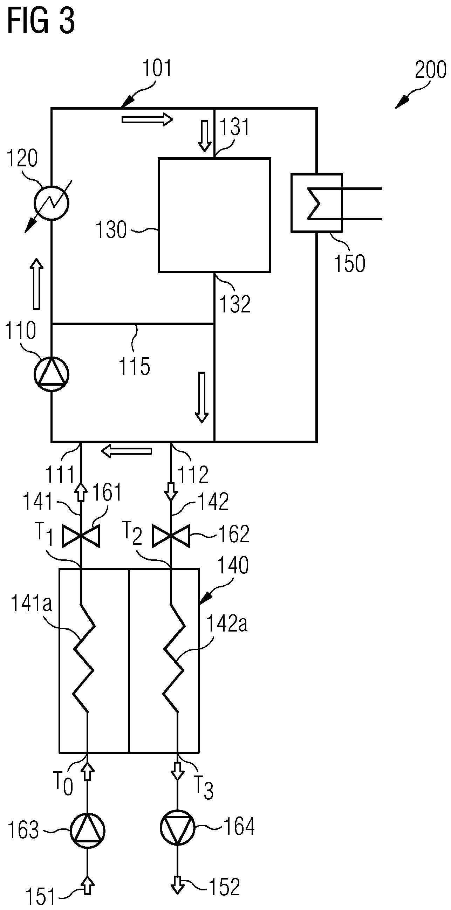

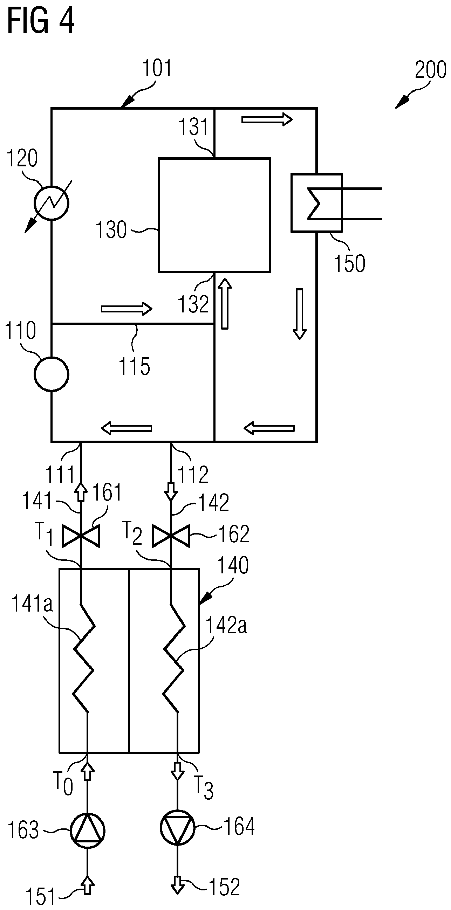

**Figures 3** and **4** schematically show another embodiment of a thermal energy storage plant 200 comprising a heat storage cycle 101, where a working fluid is circulated. This embodiment differentiates itself from the embodiment of figure 1 in that:
- a by-pass duct 115 between the delivery of the fluid transporting machine 110 and the cold end 132 of the thermal energy storage 130,
- a supplementary branch connected between the hot end 131 and the cold end 132 of the thermal energy storage 130 and including a heat exchanger 150 for receiving thermal energy from the working fluid during a discharge phase of the thermal energy storage 130,
- the extraction point 112 and the insertion point 111 are both positioned between the thermal energy storage 130 and the fluid transporting machine 110, the extraction point 112 being upstream of the insertion point 111.

According to embodiments of the present invention, the heat exchanger 150 is a steam generator for transferring thermal energy from the working fluid to a mass of water in order to generate steam to be fed to the thermal machine (not shown in the attached figures). The thermal machine may be a steam turbine having an output shaft connected to an electrical generator to produce electricity to be fed in an electricity grid. According to another possible embodiment, the heat exchanger 150 is a boiler or an evaporator or other type of heat exchanger for receiving heat from the working fluid.

An insertion fluid transporting machine 163 may be provided on the first flow path 141. The insertion fluid transporting machine may not be present if the heat storage cycle is operating on an underpressure relative to the source 151. An extraction fluid transporting machine 164 may be provided on the second flow path 142. The extraction fluid transporting machine may not be present if the heat storage cycle is operating on an overpressure relative to the waste 152.

In the thermal energy storage plant 200 a charging phase and discharging phase may be distinguished. In the charging phase (represented in figure 3 by black arrows) of the thermal energy storage plant 200 the fluid transporting machine 110 generates a flow of the working fluid, which reaches the heating device 120. The working fluid is heated by the heating device 120 and enters the thermal energy storage 130 for transferring the thermal energy received from the heating device 120 to the heat storing elements inside the thermal energy storage 130, between the hot end 131 and the cold end 132. Downstream the cold end 132 of the thermal energy storage 130, the working fluid returns to the fluid transporting machine 110 first through the extraction point 112 and then through the insertion point 111. In the discharging phase (represented in figure 4 by white arrows) the fluid transporting machine 110 generates a flow of the working fluid, which through the by-pass duct 115 reaches the cold end 132 of the thermal energy storage 130. The working fluid crosses then the heat accumulator 130 from the cold end 132 to the hot end 131, i.e. in opposite direction with respect to the flow of the working fluid in the charging phase. Inside the heat accumulator 130, during the discharge phase, the working fluid receives thermal energy from the heat storing elements inside the heat accumulator 130. Such thermal energy is transported from the working fluid to the heat exchanger 150. Downstream the heat exchanger 150 the working fluid returns to the fluid transporting machine 110 first through the extraction point 112 and then through the insertion point 111.

## Claims

1. A thermal energy storage plant (100, 200) comprising:
- a fluid transporting machine (110) for generating a flow of a working fluid in the thermal energy storage plant (100),
- a heating device (120) for transferring heat to the working fluid,
- a thermal energy storage (130) for storing the thermal energy of the working fluid,
wherein the thermal energy storage plant (100) further includes:
- an insertion point (111) for receiving at least a portion of the working fluid from a source (151),
- an extraction point (112) for delivering at least a portion of the working fluid to a waste (152),
- a first flow path (141) extending from the source (151) of the working fluid to the insertion point (111), the first flow path (141) including a first thermal exchange path (141a) along which the temperature of the working fluid is raised from an initial temperature (T0) to a first temperature (T1),
- a second flow path (142) extending from the extraction point (112) to the waste (152), the second flow path (142) including a second thermal exchange path (142a) along which the temperature of the working fluid is lowered from a second temperature (T2) higher than the first temperature (T1) to a final temperature (T3),
the first thermal exchange path (141a) and the second thermal exchange path (142a) being in thermal contact with each other.

2. The thermal energy storage plant (100, 200) according to claim 1, wherein the thermal energy storage plant (100) further includes a heat exchanger (140) comprising the first thermal exchange path (141a) and the second thermal exchange path (142a).

3. The thermal energy storage plant (100, 200) according to claim 1 or 2, wherein the first thermal exchange path (141a) and the second thermal exchange path (142a) are arranged in countercurrent with respect to each other.

4. The thermal energy storage plant (100) according to any of the previous claims, wherein the extraction point (112) and the insertion point (111) are positioned in the thermal energy storage plant (100) with respect to the flow of a working fluid so that the extraction point (112) is downstream of the insertion point (111).

5. The thermal energy storage plant (200) according to any of the previous claims, wherein the extraction point (112) and the insertion point (111) are positioned in the thermal energy storage plant (100) with respect to the flow of a working fluid so that the extraction point (112) is upstream of the insertion point (111).

6. The thermal energy storage plant (100, 200) according to claim 4 or 5, wherein the extraction point (112) and the insertion point (111) are both positioned downstream of the thermal energy storage (130).

7. The thermal energy storage plant (100) according to claim 4, wherein the extraction point (112) and the insertion point (111) are respectively positioned downstream and upstream of the fluid transporting machine (110).

8. The thermal energy storage plant (200) according to any of the previous claims, wherein an insertion fluid transporting machine (163) is provided on the first flow path (141).

9. The thermal energy storage plant (200) according to any of the previous claims, wherein an extraction fluid transporting machine (164) is provided on the second flow path (142) .

10. The thermal energy storage plant (100, 200) according to any of the preceding claims, wherein the first flow path (141) includes at least a first valve (161) for regulating the mass flow in the first flow path (141).

11. The thermal energy storage plant (100, 200) according to any of the preceding claims, wherein the second flow path (142) includes at least a second valve (162) for regulating the mass flow in the second flow path (142).

12. The thermal energy storage plant (100, 200) according to any of the preceding claims, further including a heat exchanger (150) for receiving thermal energy from the working fluid during a discharge phase of the thermal energy storage (130) .

13. A method for operating a thermal energy storage plant (100) including a fluid transporting machine (110) for generating a flow of a working fluid in the thermal energy storage plant (100), a heating device (120) for transferring heat to the working fluid, a thermal energy storage (130) for storing the thermal energy of the working fluid, the method comprising the steps of:
- connecting a source (151) of working fluid to an insertion point (111) of the thermal energy storage plant (100) through a first flow path (141), the first flow path (141) including a first thermal exchange path (141a) along which a first temperature of the working fluid is raised from an initial temperature (T0) to a first temperature (T1),
- connecting an extraction point (112) of the thermal energy storage plant (100) to a waste (152) through a second flow path (142), the second flow path (142) including a second thermal exchange path (142a) along which the temperature of the working fluid is lowered from a second temperature (T2) higher than the first temperature (T1) to a final temperature (T3),
the first thermal exchange path (141a) and the second thermal exchange path (142a) being in thermal contact with each other.

14. The method according to claim 13, wherein the first thermal exchange path (141a) and the second thermal exchange path (142a) are arranged in countercurrent with respect to each other.
